**Europäisches Patentamt**

**European Patent Office**

**Office européen des brevets**

(11) Veröffentlichungsnummer: **0 121 582**
**A1**

# EUROPÄISCHE PATENTANMELDUNG

(21) Anmeldenummer: 83103377.4

(22) Anmeldetag: 07.04.83

(51) Int. Cl.³: **B 23 B 27/16**

(43) Veröffentlichungstag der Anmeldung: 17.10.84
Patentblatt 84/42

(84) Benannte Vertragsstaaten: **FR GB**

(71) Anmelder: **Fried. Krupp Gesellschaft mit beschränkter Haftung, Altendorfer Strasse 103, D-4300 Essen 1 (DE)**

(72) Erfinder: **Ostermann, Günter, Dr., Felixstowestrasse 32, D-4230 Wesel (DE)**

(54) **Befestigungsvorrichtung für Schneidelemente.**

(57) Vorrichtungen für die Befestigung von mit Spannmulden ausgestatteten Schneidelementen an Werkzeughaltern sind vielfach mit einem Spannarm ausgestattet, der sich zur Festlegung des Schneidelements in waagerechter und lotrechter Richtung in zumindest einer Spannmulde auf diesem abstützt und der über eine Befestigungseinheit mit Spannrichtung auf den Werkzeughalter mit diesem in Verbindung steht. Falls der Spannarm mehrere nebeneinanderliegende Spannfinger aufweist, greifen diese jeweils in eine eigene Spannmulde ein.

Zur Verbesserung der Klemmwirkung des Spannarms durch Erzeugung einer Kraftwirkung nicht nur in Richtung auf die Auflage des Schneidelements und zur Erhöhung der Wirtschaftlichkeit der Befestigungsvorrichtung weist der Spannarm (4) mehrere in die Spannmulde eingreifende Spannfinger (14, 15) auf, die in der Spannebene (Pfeil 13) des Befestigungselements durch einen außerhalb dieser liegenden, sie voneinander trennenden Spalt (11) elastisch gegeneinander beweglich ausgebildet sind, d.h. in Spannrichtung übereinanderliegen. Zumindest einer der Spannfinger bewirkt als Vorspannelement (15) die seitliche Anlage des Schneidelements (3) quer zur Spannrichtung; der zumindest eine weitere Hauptspannfinger (14) stellt als Hauptspannelement die Auflage des Schneidelements in Spannrichtung am Werkzeughalter sicher.

FRIED. KRUPP GESELLSCHAFT
MIT BESCHRÄNKTER HAFTUNG

Befestigungsvorrichtung für Schneidelemente

Die Erfindung betrifft eine Vorrichtung für die Befestigung von mit Spannmulden ausgestatteten Schneidelementen, insbesondere von Wendeschneidplatten, an Werkzeughaltern, mit einem Spannarm, der sich zur Festlegung des Schneidelements in waagerechter und lotrechter Richtung in dessen Spannmulde abstützt und der über eine Befestigungseinheit mit Spannrichtung auf den Werkzeughalter mit diesem in Verbindung steht.

Üblicherweise wird der Spannarm durch Anziehen der beispielsweise als Spannschraube ausgebildeten Befestigungseinheit gegen das Schneidelement gedrückt, wodurch dieses in der zugehörigen Schneidelement-Aufnahme des Werkzeughalters festgehalten wird. Da sowohl die Spannmulde als auch die Aufnahme - die meistens eine Auflagefläche und mehrere der Lagesicherung dienende Seitenflächen aufweist - insbesondere fertigungsbedingte Ungenauigkeiten aufweisen, läßt sich eine exakte Lagesicherung des Schneidelements in der Aufnahme normalerweise nicht erreichen. Während des Arbeitseinsatzes des Schneidelements kann dieses daher bezüglich der Aufnahme unerwünschte Bewegungen ausführen, die eine exakte Bearbeitung des in Frage kommenden Werkstücks zumindest erschweren und ggf. einen Bruch des Schneidelements zur Folge haben.

Aus der DE-OS 25 55 035 ist bereits ein Schneidwerkzeug bekannt, dessen mit mehreren Spannfingern ausgestatteter Spannarm sich jeweils in mehreren Spannmulden auf dem zugehörigen Schneidelement abstützt; jedem der quer zur Spannrichtung nebeneinanderliegenden Spannfinger ist also eine eigene, ihn aufnehmende Spannmulde zugeordnet.

Die Erfindung hat sich die Aufgabe gestellt, die bisher bekannten Befestigungsvorrichtungen in der Weise weiterzuentwickeln, daß das Anziehen der Befestigungseinheit nicht nur eine Kraftwirkung in Spannrichtung, d. h. in Richtung auf die Auflagefläche der Schneidelement-Aufnahme, sondern auch eine die seitliche Anlage in der Aufnahme sicherstellende Kraftwirkung zur Folge hat. Trotz dieser Kraftwirkung in zwei verschiedenen Richtungen soll die zu entwickelnde Befestigungsvorrichtung verhältnismäßig einfach aufgebaut und wenig störanfällig sein.

Die gestellte Aufgabe wird durch eine Befestigungsvorrichtung gelöst, die im wesentlichen die Merkmale des Patentanspruchs 1 aufweist. Der der Erfindung zugrundeliegende Lösungsgedanke besteht danach insbesondere darin, den in die Spannmulde eingreifenden Spannarm aus zumindest zwei elastisch gegeneinander beweglichen Spannfingern aufzubauen, die entweder die seitliche Anlage des Schneidelements quer zur Spannrichtung oder die Auflage des Schneidelements in Spannrichtung am Werkzeughalter, d. h. in Richtung auf die Auflagefläche der bereits erwähnten Schneidelement-Aufnahme, bewirken. Dies wird dadurch erreicht, daß die Spannfinger durch einen sie voneinander trennenden Spalt elastisch gegeneinander beweglich ausgebildet sind, der außerhalb der Spannebene liegt; ein wesentliches Merkmal des Erfindungsgegenstandes besteht also

0121582

darin, daß die Spannfinger, die in eine ihnen gemeinsame Spannmulde eingreifen, in Spannrichtung gesehen nicht nebeneinander, sondern übereinander liegen.

Die Spannfinger, also der bzw. die Vorspannfinger und der bzw. die Hauptspannfinger, können so ausgebildet sein, daß sie beim Anziehen der Befestigungseinheit entweder gleichzeitig oder auch nacheinander auf die Spannmulde des Schneidelements einwirken; im letztgenannten Fall wird zunächst über den bzw. über die Vorspannfinger die seitliche Anlage des Schneidelements in der Aufnahme sichergestellt, bevor anschließend über den bzw. die Hauptspannfinger die endgültige Befestigung durch Anpressen des Schneidelements in Richtung auf die Auflagefläche herbeigeführt wird.

Der Bewegungsspielraum der Spannfinger gegeneinander ist dabei in einfacher Weise durch die Höhe des sie voneinander trennenden Spalts in Spannrichtung gegeben, der außerhalb der Spannebene liegt. Die Länge des Spalts, welcher vom Endabschnitt des Spannarms im Bereich der Spannmulde in Richtung auf die Befestigungseinheit ausgeht, richtet sich nach den Federeigenschaften des verwendeten Werkstoffs.

Bei einer bevorzugten Ausführungsform ist der Spannarm teilweise geschlitzt, so daß die Spannfinger außerhalb des dadurch entstandenen Spaltbereichs als feste Bestandteile des Spannarms ineinander übergehen (Patentanspruch 2).

Es ist jedoch auch möglich, die Spannfinger aus Einzelteilen herzustellen und sie außerhalb des Spaltbereichs entweder unmittelbar oder mittelbar über Zwischenstücke aneinander zu befestigen (Patentanspruch 3); die Befestigung der Einzelteile kann beispielsweise durch Schrauben,

Kleben, Schweißen oder Löten erfolgen. Der Vorteil dieser Ausführungsform besteht insbesondere darin, daß die die Spannfinger bildenden Einzelteile aus Werkstoffen mit unterschiedlichen Eigenschaften, insbesondere Federeigenschaften, bestehen können. Insbesondere ist es möglich, beispielsweise nur die als Vorspannelemente dienenden Vorspannfinger aus Federstahl herzustellen (Patentanspruch 5).

Der Erfindungsgegenstand kann dadurch weiter ausgestaltet sein, daß der Spalt zwischen den Spannfingern zumindest teilweise, insbesondere auf einem Teil seiner Längserstreckung, mit einem elastischen Werkstoff ausgefüllt ist (Patentanspruch 4). Der elastische Werkstoff, insbesondere Gummi oder ein geeigneter Kunststoff, kann zur Schwingungsdämpfung und/oder dazu verwendet werden, eine Verschmutzung des Spalts während des Zerspanungsvorgangs zu verhindern.

Das Verhältnis der Stärke zwischen den Vorspannfingern und den Hauptspannfingern hängt von der jeweils gewünschten Kraftwirkung quer zur Spannrichtung bzw. in Spannrichtung ab. Vorzugsweise weisen die Vorspannfinger - in Richtung der Spannebene gesehen - eine geringere Materialstärke auf als die Hauptspannfinger (Patentanspruch 6). Die Länge des Spalts zwischen den Spannfingern ist zweckmäßigerweise so bemessen, daß dieser - von der Spannmulde in Richtung auf die Befestigungseinheit gesehen - allenfalls unmittelbar vor dieser endet (Patentanspruch 7); der Spalt kann sich jedoch auch bis in den Bereich der Bohrung für die Befestigungseinheit oder unter Umständen auch über diese hinaus erstrecken.

Um die gewünschte Wirkung der Spannfinger auf das Schneidelement sicherzustellen, sind die Spannfinger und der sie trennende Spalt im Bereich des Schneidelements in

Richtung auf dieses abgewinkelt (Patentanspruch 8).

Die Lagesicherung des Schneidelements bezüglich des Werkzeughalters kann ggf. dadurch weiter verbessert werden, daß - bedingt durch eine geeignete Abstimmung der Abmessungen zwischen Spannfinger und Spannmulde - sich zumindest einer der Spannfinger außerhalb der der Befestigungseinheit zugewandten Rückwand der Spannmulde zusetzlich an deren Seitenwänden abstützt (Patentanspruch 9). Die Breite des betreffenden Spannfingers bzw. der betreffenden Spannfinger stimmt dabei also mit der Breite der Spannmulde überein; je nach der Form der in Frage kommenden Spannfinger kann sich eine punktförmige, linienhafte oder auch flächenhafte Berührung mit den Seitenwänden ergeben.

Bei Ausführungsformen mit lediglich zwei Spannfingern (d. h. einem Hauptspannfinger und einem Vorspannfinger) ist der Vorspannfinger vorzugsweise so ausgebildet, daß er lediglich linienhaft an der Rückwand der Spannmulde anliegt (Patentanspruch 10).

Jeder Hauptspannfinger stützt sich vorteilhaft über seinen der Grundfläche der Spannmulde zugewandten Endabschnitt flächig an dieser ab (Patentanspruch 11). Es ist jedoch auch möglich, den in die Spannmulde eingreifenden Eingriffsabschnitt des Spannarms nach Art einer Kugelkalotte auszubilden (Patentanspruch 12).

Die Verwendung des Erfindungsgegenstandes ist nicht auf Schneidelemente mit in bestimmter Weise ausgebildeten Spannmulden beschränkt; diese können beliebig ausgebildet sein, also beispielsweise nach Art einer Kugelkalotte, quaderförmig ggf. mit abgerundeten Übergängen, pyramidenförmig oder kegelstumpfförmig. Wesentlich ist in diesem Zusammenhang lediglich, daß der Eingriffsabschnitt des Spannarms ggf. der Form der Spannmulde angepaßt ist, damit die den
Spannarm bildenden Haupt- und Vorspannfinger die ihnen bestimmte Aufgabe erfüllen können (Patentanspruch 13).

Der Erfindungsgegenstand wird nachfolgend anhand mehrerer
in der Zeichnung dargestellten Ausführungsbeispiele im einzelnen erläutert.

Es zeigen:

Fig. 1          schematisch einen Längsschnitt durch ein
                Schneidwerkzeug, dessen Spannarm zwei Spannfinger aufweist,

Fig. 2 a, b     einen Teilschnitt durch einen Spannarm mit zwei
                Spannfingern im Bereich einer Wendeschneidplatte, und zwar bei nicht angezogener bzw.
                angezogener Spanneinheit,

Fig. 3 a, b     einen Teillängsschnitt durch eine Wendeschneidplatte mit einer Spannmulde in Form eines Kugelabschnitts bzw. einen Schnitt nach Linie
                III-III in Fig. 3 a,

Fig. 4 a, b     einen Teillängsschnitt durch eine Wendeschneidplatte mit einer Spannmulde in Form eines
                Pyramidenstumpfes bzw. einen Schnitt nach
                Linie IV-IV in Fig. 4 a.

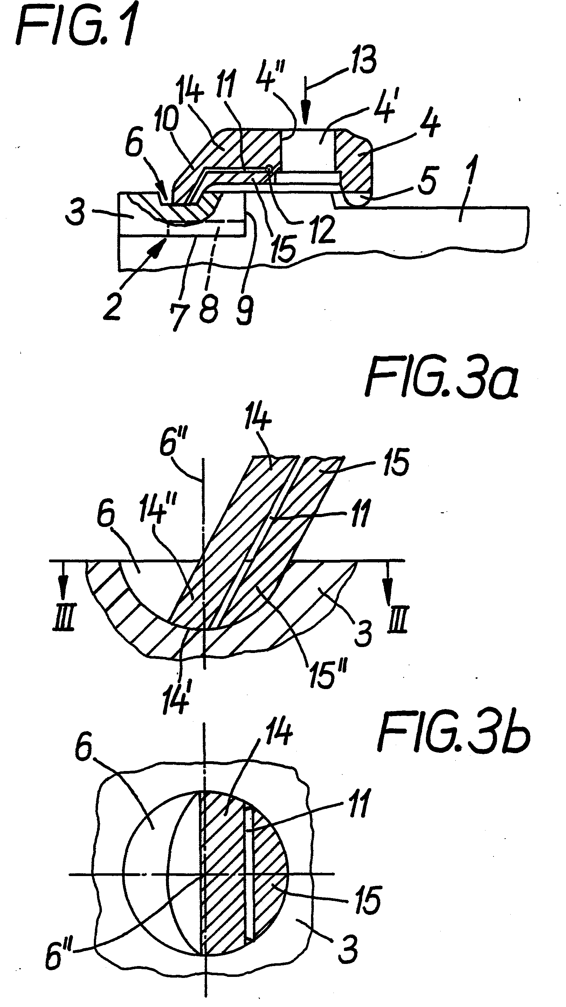

Das (in Fig. 1 schematisch dargestellte) Schneidwerkzeug
weist als wesentliche Bestandteile einen Werkzeughalter 1
mit einer Aufnahme 2, eine Wendeschneidplatte 3 und einen
Spannarm 4 mit einer Befestigungsbohrung 4' für eine nicht
dargestellte Befestigungseinheit in Form einer Spannschraube
auf; diese stützt sich - ggf. unter Zwischenschaltung eines
Federelements - über einen Führungsabschnitt an dem oben
liegenden Zentrierabschnitt 4" der Bohrung 4 ab.
Der Spannarm 4 ist auf der von der Wendeschneidplatte 3 abgewandten Seite mit einem ggf. auf dem Werkzeughalter 1 aufliegenden Stützfuß 5 ausgestattet.

Die mit einer Spannmulde 6 ausgestattete Wendeschneidplatte 3 ist einerseits über die unten liegende Auflagefläche 7 und andererseits über zumindest eine Seitenwand 8 sowie die der Befestigungseinheit bzw. der Bohrung 4' zugewandte Rückwand 9 der Aufnahme gehalten.

Der Spannarm 4 ist - ausgehend von seinem in die Spannmulde 6 eingreifenden Eingriffsabschnitt 10 mit Blickrichtung auf die Bohrung 4'-mit einem Spalt 11 versehen, der vor der Bohrung 4' in einer Abschlußbohrung 12 endet und der senkrecht zur Spannebene, d.h. senkrecht zur Zeichenebene verläuft; die in der Zeichenebene liegende Spannebene ist gleichzeitig durch den Pfeil 13 festgelegt, welcher die auf den Werkzeughalter 1 zielende Spannrichtung andeutet.

Abhängig von den gewünschten Werkstoffeigenschaften und dem gewünschten Betriebsverhalten kann der Spalt 11 in Richtung auf den Stützfuß 5 des Spannarms 4 bis in den Bereich der Bohrung 4' oder über diese hinaus verlängert werden.

Bedingt durch den Spalt 11 weist der Spannarm 4 in dem der Wendeschneidplatte 3 zugewandten Bereich zwei Spannfinger auf, nämlich einen oberen, stärker dimensionierten Hauptspannfinger 14 und einen unteren, schwächer dimensionierten Vorspannfinger 15. Der Verlauf des Spaltes 11 ist vorzugsweise der äußeren Form des Spannarms 4 angepaßt, entsprechendes gilt für die Ausbildung insbesondere des Vorspannfingers 15 im Hinblick auf den zugehörigen Teil der Spannmulde 6.

Beim Anziehen der nicht dargestellten Befestigungseinheit in Richtung auf den Werkzeughalter 1 bewirkt der Vorspannfinger 15 insbesondere die seitliche Anlage der Wendeschneidplatte 3 quer zur Spannrichtung (Pfeil 13) an der Rückwand 9 der Aufnahme 2; der Hauptspann-

finger 14 stützt sich über seinen Endabschnitt 14',
welcher der Grundfläche 6' der Spannmulde 6 zugewandt
ist, auf der Wendeschneidplatte 3 ab und bewirkt dadurch deren Auflage in Richtung der Spannrichtung
(Pfeil 13) an der Auflagefläche 7 der Aufnahme 2.
Die bereits erwähnte Dimensionierung des Hauptspannfingers 14 und des Vorspannfingers 15 hängt von der
jeweils aufzubringenden Kraft ab; der Bewegungsspielraum der beiden Spannfinger gegeneinander ist durch
die Spalthöhe h (vgl. Fig. 2) parallel zur Spannebene
(Pfeil 13) festgelegt.

Das Verhalten der Spannfinger 14 und 15 im Verlauf
des Spannvorgangs läßt sich am besten anhand der Fig.2
verdeutlichen.
Vor dem Anziehen der Befestigungseinheit in Richtung
des Pfeiles 13 (vgl. Fig. 1) liegt die Wendeschneidplatte 3 auf der Auflagefläche 7 auf, ohne die Rückwand 9 der Aufnahme zu berühren. Der Endabschnitt 14'
bzw. 15' der Spannfinger befindet sich noch oberhalb
der Grundfläche 6' der Spannmulde 6, d.h. die Spannfinger greifen nur mit einem Teil ihres Eingriffsabschnitts 14" bzw. 15" in die Spannmulde ein.
Durch Anziehen der Befestigungseinheit wird der Spannarm mit den Spannfingern 14 und 15 in Richtung des
Pfeiles 13 auf den Werkzeughalter 1 zu bewegt, wodurch
unter Einwirkung des Eingriffsabschnitts 15" des Vorspannfingers 15 die Wendeschneidplatte 3 nach rechts
mitgeführt und schließlich an der Rückwand 9 mit einer
bestimmten Kraft festgehalten wird.
Die Fortsetzung des Spannvorgangs führt schließlich
zu einer Bewegung des Hauptspannfingers in die in Fig.2b
strichpunktiert angedeutete Klemmstellung, in welcher
der Endabschnitt 15' auf der Grundfläche 6' der Spannmulde 6 mit einer bestimmten Spannkraft aufliegt;

0121582

während der Bewegung des Hauptspannfingers in die Klemmstellung bleibt die Stellung des Vorspannfingers 15
praktisch unverändert. Ermöglicht wird die Relativbewegung zwischen den beiden Spannfingern durch die Verwendung eines Werkstoffs mit geeigneten Federeigenschaften.

Die Spannkraft, die mittels der Befestigungseinheit auf
den Spannarm 4 aufgebracht wird, bewirkt also sowohl
die seitliche Anlage als auch die Auflage der Wendeschneidplatte am Werkzeughalter 1 bzw. an den zugehörigen Flächen 7 und 9 der Aufnahme 2 (vgl. Fig. 1). Diese
Doppelklemmung gewährleistet eine einwandfreie Befestigung der Wendeschneidplatte 3 während des Arbeitseinsatzes.

Die Ausbildung der Spannfinger 14 und 15 im Bereich
der Spannmulde 6, d.h. die Ausbildung des jeweiligen
Eingriffsabschnitts 14" bzw. 15", kann beliebig sein
und wird allenfalls durch die Form der Spannmulde selbst
beeinflußt. Diese kann also insbesondere so ausgestaltet
sein, daß sich die Wendeschneidplatte möglichst einfach
und preisgünstig, beispielsweise durch Pressen, herstellen läßt.
Bei der in Fig. 3 dargestellten Ausführungsform weist
die Wendeschneidplatte 3 eine Spannmulde 6 in Form eines Kugelabschnitts auf, an den die Eingriffsabschnitte 14" und 15" der Spannfinger 14 und 15 angepaßt sind.

Die beiden Spannfinger sind bezüglich des Kugelabschnitts so angeordnet, daß der Endabschnitt 14' des
Hauptspannfingers 14 im Bereich der Mittelachse 6"
des Kugelabschnitts auf der Wendeschneidplatte 3 aufliegt.
Die Breite der Spannfinger 14 und 15 (vgl. Fig. 3b)
ist so gewählt, daß diese den Kugelabschnitt insoweit
praktisch ausfüllen, d.h. auch seitlich anliegen.

0121582

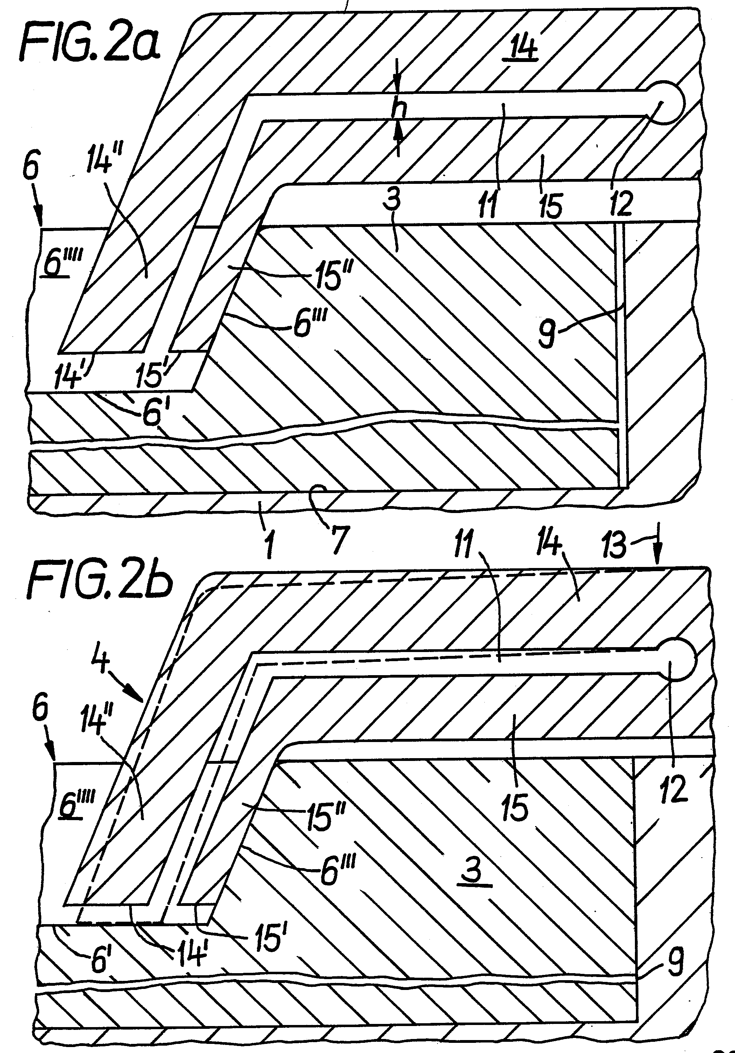

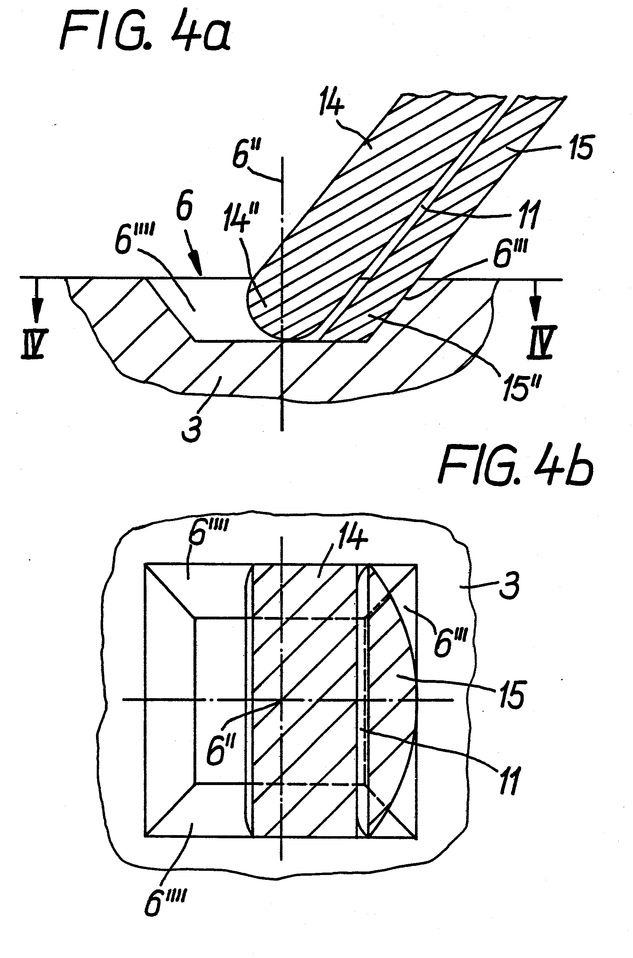

Bei der in Fig. 4 dargestellten Ausführungsform, deren Wendeschneidplatte 3 eine Spannmulde 6 in Form eines Pyramidenstumpfes aufweist, sind die Spannfinger 14 und 15 sowohl hinsichtlich ihres Eingriffsabschnitts 14" bzw. 15" als auch hinsichtlich ihres Querschnitts unterschiedlich ausgebildet. Während der in der Zeichenebene liegende Querschnitt des Hauptspannfingers 14 einen kreisförmig gerundeten Eingriffsabschnitt 14" aufweist, ist der entsprechende Querschnitt des Vorspannfingers 15 der zugehörigen Schrägfläche der Spannmulde 6 angepaßt. Bedingt durch die Form seines Eingriffsabschnitts stützt sich der Hauptspannfinger 14 in der Nähe der Mittelachse 6" lediglich linienhaft an der Grundfläche 6' der Spannmulde ab.

Die Form des Hauptspannfingers quer zur Zeichenebene (vgl. Fig. 4b) ist der Spannmulde 6 so angepaßt, daß der Eingriffsabschnitt 14" diese insoweit vollständig ausfüllt, also auch eine Fixierung der Wendeschneidplatte quer zur Zeichenebene bewirkt.
Der Vorspannfinger 15 dagegen ist quer zur Zeichenebene (Fig. 4b) nach Art eines Kreisabschnitts ausgebildet und berührt demzufolge die ihm gegenüber liegende Wand 6"' der Spannmulde 6 lediglich linienhaft.

Im Gegensatz zu der in Fig. 1 und Fig. 2 dargestellten Ausführungsform kann der Spannarm mehrere aus Einzelteilen bestehende Spannfinger aufweisen, die entsprechend den gewünschten Eigenschaften ggf. aus verschiedenen Werkstoffen bestehen können. Insbesondere kann dabei der Vorspannfinger 15 (im Gegensatz zum zugehörigen Hauptspannfinger 14) aus Federstahl gefertigt sein.

Die Wirkung und Handhabung der erfindungsgemäßen Befestigungsvorrichtung kann insbesondere dadurch weiter verbessert werden, daß der Spalt 11, zumindest auf einem Teil seiner Längserstreckung, mit Gummi ausgefüllt ist. Dieses dämpft einerseits die beim Zerspanungsvorgang auftretenden Erschütterungen bzw. Schwingungen und verhindert andererseits eine Verschmutzung und ggf. Blockierung des Spaltes 11.

Der Erfindungsgegenstand kann im übrigen auch bei Schneidwerkzeugen und bei Spannarmen zur Anwendung kommen, die andersartig als in Fig. 1 dargestellt ausgebildet sind.

Wesentlich ist in dem hier interessierenden Zusammenhang eine geeignete Ausbildung sowohl des Spannarms, d.h. insbesondere des Vorspannfingers, als auch der Spannmulde, d.h. insbesondere des mit dem Vorspannfinger zusammenwirkenden Teils der Spannmulde, die eine exakte Ausrichtung und Befestigung der Wendeschneidplatte in der Aufnahme des Schneidwerkzeugs ermöglichen. Die Spannmulde und der Vorspannfinger müssen also hinsichtlich ihrer Ausbildung so aufeinander abgestimmt sein und so ineinandergreifen, daß die Wendeschneidplatte beim Anziehen der Befestigungseinheit auch gegen die Seitenwand bzw. Seitenwände und die Rückwand der Aufnahme gedrückt wird.

Einer der wesentlichen Vorteile des Erfindungsgegenstandes besteht darin, daß das Schneidelement auch dann, wenn es lediglich eine einzige Spannmulde (wie in Fig. 1 dargestellt) aufweist, in mehreren unterschiedlichen Stellungen am zugehörigen Werkzeughalter befestigt werden kann. Mittels des mit mehreren in Spannrichtung übereinanderliegenden Spannfingern ausgestatteten Spannarms können ggf. auch unterschiedlich ausgebildete Schneidelemente festgehalten werden, sofern diese eine übereinstimmend geformte und angeordnete gemeinsame Spannmulde aufweisen, in welche die
betreffenden Spannfinger eingreifen.

Die Verwendung des Ausdrucks "Vorspannelement" bzw.
"Hauptspannelement" soll zum Ausdruck bringen, daß die
betreffenden Spannfinger zumindest vorwiegend oder hauptsächlich die beschriebene Wirkung aufweisen; damit ist
jedoch nicht ausgeschlossen, daß ggf. zusätzlich auch
die Wirkung der jeweils anderen Art Spannelemente, also
die Auflage in Spannrichtung bzw. die seitliche Anlage
quer zur Spannrichtung, erzielt werden kann. Beispielsweise kann der zumindest eine Hauptspannfinger zusätzlich so an den Querschnitt der ihn aufnehmenden Spannmulde angepaßt sein, daß er auch zur Festlegung des
Schneidelements in waagerechter Richtung beiträgt.

Patentansprüche

1. Vorrichtung für die Befestigung von mit Spannmulden ausgestatteten Schneidelementen, insbesondere von Wendeschneidplatten, an Werkzeughaltern, mit einem Spannarm, der sich zur Festlegung des Schneidelements in waagerechter und lotrechter Richtung in dessen Spannmulde abstützt und der über eine Befestigungseinheit mit Spannrichtung auf den Werkzeughalter mit diesem in Verbindung steht, **d a d u r c h  g e k e n n - z e i c h n e t**, daß der Spannarm (4) mehrere in die Spannmulde (6) eingreifende Spannfinger (14, 15) aufweist, die in der Spannebene (Pfeil 13) des Befestigungselements durch einen außerhalb dieser liegenden, sie voneinander trennenden Spalt (11) elastisch gegeneinander beweglich ausgebildet sind und von denen zumindest einer als Vorspannelement (15) die seitliche Anlage des Schneidelements (3) quer zur Spannrichtung und der zumindest eine weitere Hauptspannfinger (14) als Hauptspannelement die Auflage des Schneidelements in Spannrichtung am Werkzeughalter (1) bewirkt.

2. Vorrichtung nach Anspruch 1, dadurch gekennzeichnet, daß die Spannfinger (14, 15), außerhalb des Spaltbereichs als feste Bestandteile des Spannarms (4) ineinander übergehen.

3. Vorrichtung nach Anspruch 1, dadurch gekennzeichnet, daß die Spannfinger (14, 15) aus Einzelteilen bestehen, die außerhalb des Spaltbereichs zumindest mittelbar aneinander befestigt sind.

4. Vorrichtung nach einem der Ansprüche 1 bis 3, dadurch gekennzeichnet, daß der Spalt (11) zwischen den Spannfingern (14, 15) zumindest teilweise mit einem
elastischen Werkstoff ausgefüllt ist.

5. Vorrichtung nach einem der Ansprüche 3 bis 4, dadurch
gekennzeichnet, daß nur die als Vorspannelement dienenden
Vorspannfinger (15) aus Federstahl bestehen.

6. Vorrichtung nach einem der Ansprüche 1 bis 5, dadurch
gekennzeichnet, daß die Vorspannfinger (15) - in
Richtung der Spannebene gesehen - eine geringere
Materialstärke aufweisen als die Hauptspannfinger (14).

7. Vorrichtung nach einem der Ansprüche 1 bis 6, gekennzeichnet durch einen Spalt (11), der - von der Spannmulde (6) in Richtung auf die Befestigungseinheit gesehen - allenfalls unmittelbar vor dieser endet.

8. Vorrichtung nach einem der Ansprüche 1 bis 7, dadurch
gekennzeichnet, daß die Spannfinger (14, 15) und der
sie trennende Spalt (11) im Bereich des Schneidelements
(3) in Richtung auf dieses abgewinkelt sind.

9. Vorrichtung nach einem der Ansprüche 1 bis 8, dadurch
gekennzeichnet, daß zumindest einer der Spannfinger
sich außerhalb der der Befestigungseinheit zugewandten
Rückwand (6"') der Spannmulde (6) zusätzlich an deren
Seitenwänden (6"") abstützt.

10. Vorrichtung nach einem der Ansprüche 1 bis 9, mit
lediglich zwei Spannfingern, dadurch gekennzeichnet,
daß der Vorspannfinger (15) lediglich linienhaft an
der Rückwand (6"') der Spannmulde (6) anliegt.

11. Vorrichtung nach einem der Ansprüche 1 bis 10, dadurch
gekennzeichnet, daß jeder Hauptspannfinger (14) sich über seinen der Grundfläche (6') der Spannmulde (6) zugewandten Endabschnitt (14') flächig an dieser abstützt.

12. Vorrichtung nach einem der Ansprüche 1 bis 10, dadurch gekennzeichnet, daß der in die Spannmulde (6) eingreifende Eingriffsabschnitt (14", 15") des Spannarms (4) nach Art einer Kugelkalotte ausgebildet ist.

13. Vorrichtung nach einem der Ansprüche 1 bis 12, dadurch gekennzeichnet, daß der Eingriffsabschnitt (14", 15") des Spannarms (4) der Form der Spannmulde (6) angepaßt ist.

FIG.1

FIG.3a

FIG.3b

0121582

– 1/3

82/10

FIG.2a

FIG.2b

0121582

82/1

0121582

# FIG. 4a

# FIG. 4b

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | GB-A- 810 197 (SANDVIKENS JERNVERKS AKTIEBOLAG) * Seite 2, Zeilen 49-56; Figuren 4,5 * | 1-3,5-7 | B 23 B 27/16 |
| A | GB-A- 584 258 (JACOBS) * Seite 2, Zeilen 4-33; Figuren 1,2 * | 4 | |
| A | US-A-3 526 025 (SLETTEN) | | |
| A | GB-A-1 174 100 (HEGENSCHEIDT) | | |
| A | US-A-2 962 800 (SWENSON) | | |

RECHERCHIERTE SACHGEBIETE (Int. Cl. ³)

B 23 B 27/00
B 23 B 31/00

Der vorliegende Recherchenbericht wurde für alle Patentansprüche erstellt.

| Recherchenort DEN HAAG | Abschlußdatum der Recherche 29-11-1983 | Prüfer BOGAERT F.L. |
|---|---|---|